# EUROPEAN PATENT SPECIFICATION

(11) **EP 3 300 927 B1**
(45) Date of publication and mention of the grant of the patent: **13.05.2020**
(21) Application number: 17192776.7
(22) Date of filing: 22.09.2017
(51) Int. Cl.: B60C 11/03, B60C 11/00

(54) **HEAVY DUTY TIRE AND TREAD**
SCHWERLASTREIFEN UND LAUFSTREIFEN
PNEU ET BANDE DE ROULEMENT POUR POIDS LOURD

(30) Priority: 25.09.2016 US 201662399458 P
(43) Date of publication of application: 04.04.2018
(73) Proprietor: The Goodyear Tire & Rubber Company, Akron, OH 44316 (US)
(72) Inventor: WILSON, John David, Clinton, Ohio 44216 (US); SCHESSLER, Gregory Alan, Stow, Ohio 44224 (US); SPENCER, Todd James, Hartville, Ohio 44632 (US); HUBBELL, David Ray, Hartville, Ohio 44632 (US)
(74) Representative: Kutsch, Bernd

(56) References cited:
- EP-A2- 1 026 011
- EP-A2- 1 544 000
- JP-A- 2000 177 328
- US-A1- 2003 056 867

## Description

### Field of the Invention

The present invention relates to pneumatic tires, and more particularly to very large, wide base tires for use for example, on construction vehicles such as earth movers, and rigid haul dump trucks.

### Background of the Invention

In very large tires having a diameter of 80 inches or more (2032 mm or more), tire operating conditions can be severe because of the extreme tire loading and off-road conditions. Furthermore, the speed of the vehicles may be high, which can result in excessive heat buildup in the tire. When a very large off the road tire is used in the oil sands environment, the tires are subjected to extreme dynamic and static loads. During vehicle operation, the tire may bounce through the thick, viscous sand conditions. The tire conditions result in the tire bouncing and deflecting, which can result in the tire failing earlier that its predicted life due to heat, high strain and bead failure. Thus, it is desired to have an improved tire which is a cooler running tire.

EP-A-1 544 000 describes a tire in accordance with the preamble of claim 1. Similar tires are also known from US-A-2003/056867 and JP-A-2000-177328.

EP-A-1 026 011 describes a heavy duty pneumatic radial tire having a multi-radius tread.

### Definitions

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Belt Structure" or "Reinforcing Belts" means at least two annular layers or plies of parallel cords, woven or unwoven, underlying the tread, unanchored to the bead, and preferably having both left and right cord angles, preferably in the range from 7º to 36º with respect to the equatorial plane of the tire.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction; it can also refer to the direction of the sets of adjacent circular curves whose radii define the axial curvature of the tread as viewed in cross section.

"Radial" and "radially" mean directions radially toward or away from the axis of rotation of

"Sidewall" means a portion of a tire between the tread and the bead.

### Summary of the Invention

The invention relates to a tire in accordance with claim 1.

Dependent claims refer to preferred embodiments of the invention.

One or more embodiments of the present invention provides a heavy-duty tire comprising a carcass, a tread located radially outward of the carcass, the tread having a plurality of lugs, the lugs extending radially outward from an inner tread and being located between first and second lateral tread edges, a first row of lugs extending from the tread lateral edge axially inwards toward the center plane, a second row of lugs extending from the opposite tread lateral edge and axially inwards toward the center plane and wherein the lugs of the first and second rows are separated by a plurality of shoulder grooves, wherein the first row of lugs are aligned with the second row of lugs, a center row of lugs located between a first and second offset lug, wherein all of the lugs in each row are aligned circumferentially.

One or more embodiments of the present invention provides a heavy-duty tire comprising a carcass, a tread located radially outward of the carcass, the tread having a plurality of lugs, the lugs extending radially outward from an inner tread and being located between first and second lateral tread edges, a first row of lugs extending from the tread lateral edge axially inwards toward the center plane, a second row of lugs extending from the opposite tread lateral edge and axially inwards toward the center plane and wherein the lugs of the first and second rows are separated by a plurality of shoulder grooves, wherein the first row of lugs are aligned with the second row of lugs, a center row of lugs located between a first and second offset lug, wherein all of the lugs in each row are aligned circumferentially, wherein the center lugs are joined to each other by a center groove, the center groove preferably having a tie bar.

In a preferred aspect of the invention, the tire has a molded base width in the range of from 1117.6 mm to 1270 mm (44-50 inch). Preferably, the molded base width is in the range of from 1117.6 mm to 1168.4 mm such as 1149.35 mm.

In a preferred aspect of the invention, the tire has a molded base width in the range of from 1117.6 mm to 1270 mm, wherein the shoulder drop ranges from 64 mm to 120 mm, preferably 80 mm to 100 mm such as 90 mm.

In a preferred aspect of the invention, tire has a shoulder wedge and wherein the gauge of the shoulder wedge ranges from 70 mm to 89 mm, preferably from 75 mm to 85 mm such as 80 mm.

In a preferred aspect of the invention, the tire comprises four belts under the tread, wherein the width of the fourth belt ranges from 744 mm to 780 mm, preferably from 760 mm to 770 mm such as 769 mm.

In a preferred aspect of the invention, the tire comprises four belts under the tread wherein the width of the fourth belt is in a range of from 55 % to 65% of the tread arc width, the tread arc width being preferably in a range of from 1200 mm to 1340 mm or from 1250 mm to 1290 mm such as 1270 mm.

In a preferred aspect of the invention, the tire comprises a turn up pad.

In a preferred aspect of the invention, the gauge of the turn up pad is in the range of from 35 mm to 46 mm, and preferably from 38 mm to 43 mm such as 41.5 mm.

In a preferred aspect of the invention, the tread is a multi-radius tread.

In a preferred aspect of the invention, the tread is a multi-radius tread having at least three different radii, wherein a first radius R1 ranges from 2200 to 2500 mm, a second radius R2 is less than R1 and is preferably in a range of from 1600 to 2100 mm, and wherein a third radius R3 is preferably in a range of from 1000 to 1500 mm.

### Brief Description of the Drawings

The invention will be described by way of example and with reference to the accompanying drawings in which:
FIG. 1 is a perspective view of a tire of the present invention;

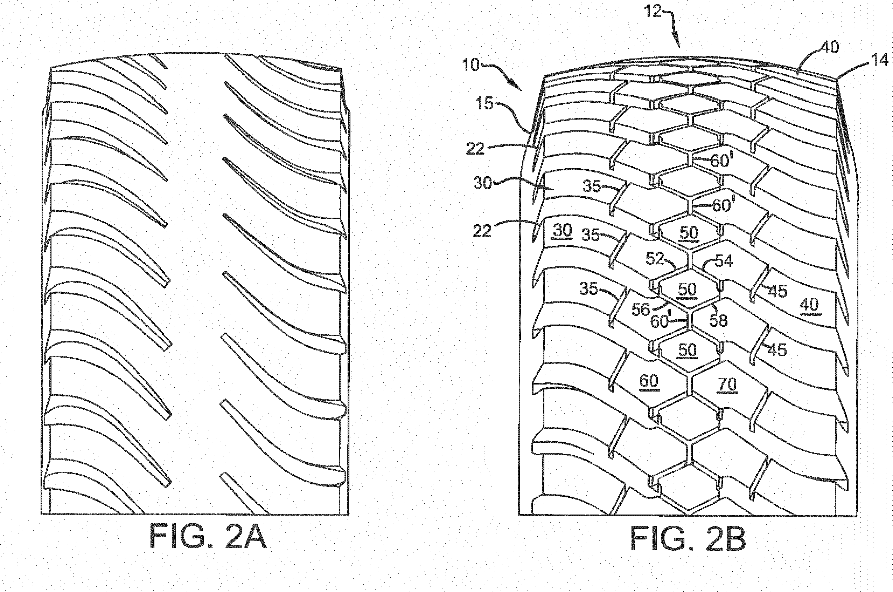

FIG. 2A is a front view of the tread of a control tire and FIG. 2B is a front view of the tread of the present invention;

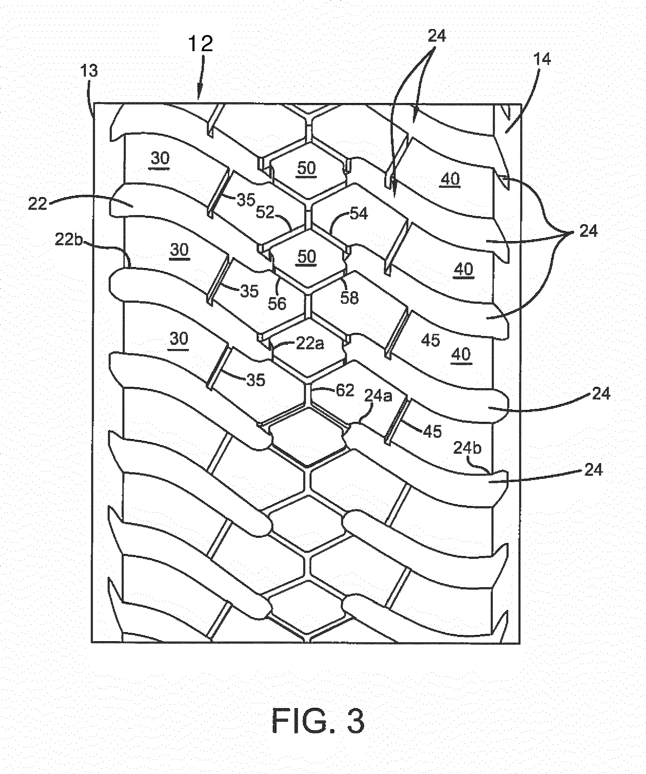

FIG. 3 is a close-up front view of the tire tread of the present invention;

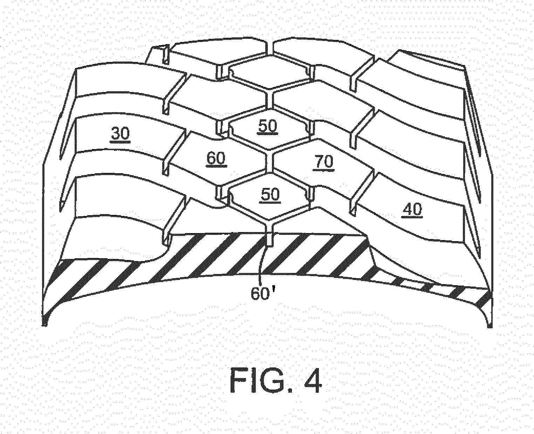

FIG. 4 is a close up side view of the tire of the present invention;
FIG. 5 is a schematic of the tire molded profile as compared to a control tire.
FIG. 6A illustrates the footprint of a control tire and FIG. 6B the footprint of the tire of the present invention.

### Detailed Description of Example Embodiments the Invention

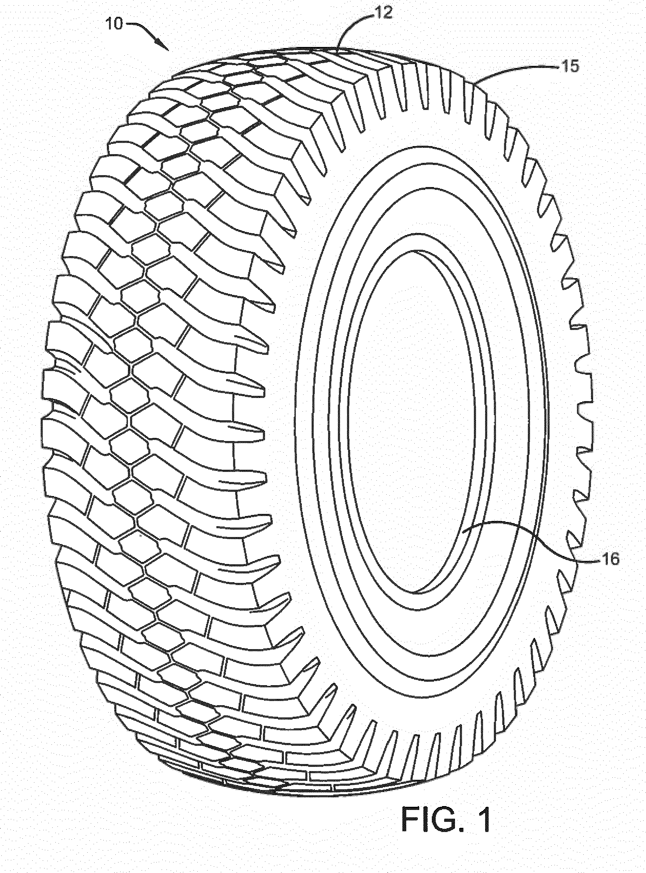

Figure 1 illustrates a first embodiment of a tire 10 of the present invention. Preferably, the tire 10 has a nominal rim diameter of 889 mm (35 inches) or more. The tire 10 has an outer ground engaging tread portion 12 which has axially outer lateral edges 13, 14. Sidewalls 15 extend radially inward from the tread lateral edges 13, 14 and terminate in a pair of bead regions 16 having an annular bead core (not shown). The tire 10 is further provided with a carcass which has a reinforcing ply structure (not shown) which extends from bead region 20 to bead region 20. The tire 10 may further include breakers and other tire components known to those skilled in the art.

The tire tread 12 preferably is a non-directional tread pattern.

The tread 12 comprises two rows of shoulder grooves 22, 24 wherein each row of shoulder grooves 22, 24 extend from a respective lateral tread edge 13, 14 towards the center plane of the tread. The shoulder grooves 22, 24 do not cross the centerline of the tread and are angled at an angle θ1, θ2. The shoulder grooves 22 in the first shoulder row each have a first axially inner end 22a which is aligned with an axially inner end 24a of a shoulder groove 24 in the second shoulder row, so that if groove 22 were extended across the entire lateral width of the tire 12, it would substantially overlap with the opposite groove 24. The shoulder grooves 22 in the first row are similarly shaped as the shoulder grooves 24 in the second row and have an angular orientation that is preferably rotated 180 degrees out of phase from the other row.

The shoulder grooves 22, 24 are preferably deep and preferably have a depth of 70-100% of the non-skid tread depth, or NSK, and more preferably 90-100% of the NSK.

The shoulder grooves 22, 24 are preferably angled at an angle θ1, θ2 in the range of from 20 to 65 degrees, more preferably in the range of from 30 to 55 degrees, and more preferably from 30-45 degrees. The high angled grooves 22, 24 provide good forward and lateral traction. The width of the shoulder grooves 22, 24 is preferably in a range of from 25-40% of the tread width W, and more preferably in a range of from 30-38% of the tread width W.

Preferably, the tread is divided into four rows of lugs. A first row of lugs comprises circumferentially aligned lugs 30 which extend from the lateral tread edge 13 to a first cross groove 35. Each lug 30 in the first row is further bounded by two shoulder grooves 22 and has the same angular orientation as the shoulder grooves 22.

Preferably, each lug 30 has a width of about 2/3 the width of the shoulder grooves 22 or from 62 to 70 % of the width of the shoulder grooves 22.

Preferably, the tread 12 has first cross grooves 35 which are circumferentially aligned and extend in a circumferential direction completely across the lugs 30 joining the shoulder grooves 22.

Preferably, the first cross groove 35 is a deep groove whose depth is in a range of 70% to 105% NSK, more preferably from 90% to 100% NSK, more preferably 95% NSK.

Preferably, the first cross groove 35 has a width of in a range of from 10% to 20% of the width of the shoulder grooves 22.

Preferably, the first cross grooves 35 form a small angle in a range of from 10-15 degrees with the circumferential direction.

The tread further comprises a second circumferentially aligned row of lugs 40. The second row comprises lugs 40 which extend from the opposite lateral tread edge 14 and axially inward to a second row of second cross grooves 45.

Each lug 40 in the second row is further bounded by two shoulder grooves 24 and has the same angular orientation as the shoulder grooves 24.

Preferably, each lug 30 has a width of about 2/3 the width of the shoulder grooves 24 or from 62 to 70 % of the width of the shoulder grooves 24.

Preferably, the tread 12 has second cross grooves 45 which are circumferentially aligned and extend in a circumferential direction completely across the lugs 40 joining the shoulder grooves 24.

Preferably, the second cross groove 45 is a deep groove whose depth is in a range of 70% to 105% NSK, more preferably from 90% to 100% NSK, more preferably 95% NSK.

Preferably, the second cross groove 45 has a width of in a range of from 10% to 20% of the width of the shoulder grooves 24.

Preferably, the second cross grooves 45 form a small angle in a range of from 10-15 degrees with the circumferential direction.

The tread further comprises a third circumferentially spaced row of center lugs 50. The center lugs 50 may or may not be the same size. The axially outer ends of the center lugs 50 are defined by grooves 52, 54, 56, 58 which are arranged to form a diamond like shape of lug 50.

A circumferential groove 60' joins each center lug 50.

Preferably, grooves 52, 54, 56, 58 are deep grooves, and more preferably have a depth of in a range of from 70-100% NSK.

The circumferential groove 60' may further comprise tie bars 62 to help stiffen the center tread region. The tire bars preferably have a height 50% or from 40% to 60% of the NSK.

Each circumferential groove 60' is preferably oriented on the centerline of the tread 12.

The tire tread 12 further comprises center offset lugs 60 and 70.

Center offset lug 60 is located between shoulder lug 30 and center lug 50.

Center offset lug 70 is located adjacent center offset lug 60, and is separated from center offset lug 60 by center circumferential groove 60'.

Center offset lug 70 is located between shoulder lug 40 and center lug 50.

Preferably, center circumferential grooves 60' are shallow, and preferably have a depth of in a range of from 10-20% NSK.

The overall net to gross ratio of the tire 12 ranges from 60 to 80%, more preferably 65 to 75%, and most preferably in the range of from 68 to 72%.

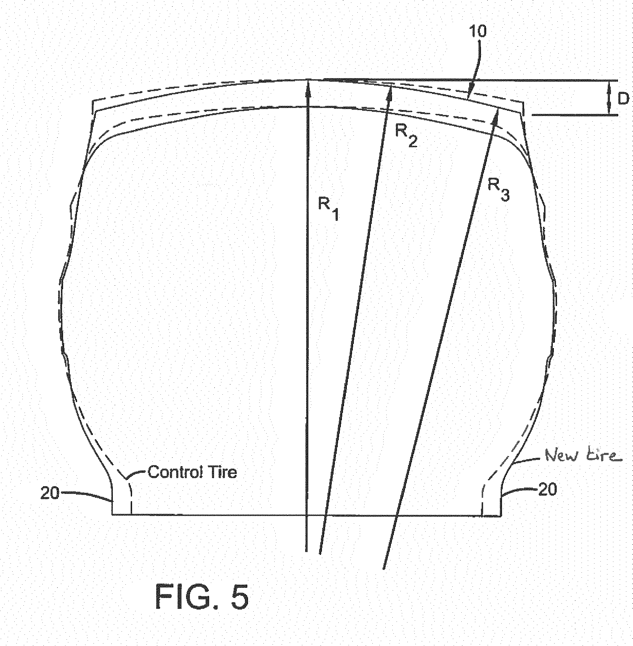

As shown in Figure 5, the tire 10 of the present invention preferably has a wider molded base width, so that the bead areas 20 are spaced farther apart as compared to a control tire. At the same time, the tire preferably has multi crown radii, an increased shoulder drop und a smooth upper sidewall.

Preferably, the molded base width is in the range of from 44 to 50 inches (1117.6 mm to 1270 mm), more preferably in the range of from 44-49 inches or from 44 to 46 inches such as 45.25 inch (1149.35 mm).

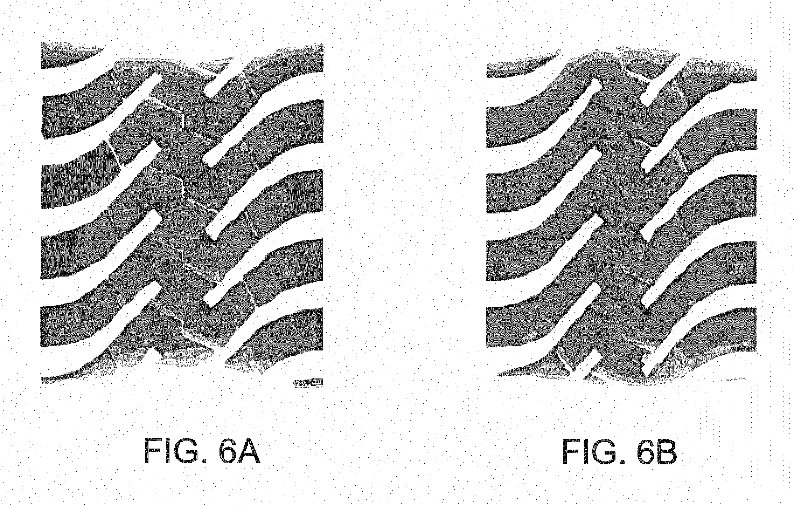

The reduction of molded base width results in a reduced section width. Preferably, the molded base width is wider than the rim width. The reduced molded base width results in a more stable tire, and reduced section width that has lower rolling resistance. The reduced molded base width also results in a crown of the tire that has increased load bearing resulting in a more rounded footprint as shown in Figure 6B.

The shoulder drop (see Fig. 5) has been increased as compared to the control tire. Preferably, the shoulder drop D ranges from 64 mm to 120 mm, and more preferably in the range of from 85 mm to 115 mm, and more preferably 93 mm to 97 mm such as 90 mm. Also, the tread profile preferably has more rounded edges. As shown in Figure 5, the tread is a multi-radius tread with a radius R1 in the center, R3 at the shoulder, and R2 therebetween. In the example, R1 is 2325 mm, R2 is 1800 mm, and R3 is 1400 mm. R1 preferably ranges from 2200-2500 mm, R2 is less than R1, R2 preferably ranges from 1600-2100 mm, and R3 preferably ranges from 1000-1500 mm.

The tire of the present invention preferably also has a reduced shoulder wedge 50. The shoulder wedge gauge is preferably in the range of from 70 mm to 89 mm, and more preferably in the range of from 75 mm to 85 mm. The reduction in shoulder wedge gauge results in lower rolling resistance, reduced heat due to the reduced mass, and a rounder footprint.

The tire of the present invention preferably also has a thinner turn up pad 30 as compared to the control tire. The gauge of the turn up pad is preferably in the range of from 35 mm to 46 mm, and more preferably in the range of from 38 mm 43 mm.

The tire of the present invention preferably also has wider belts. In particular, the third radially outer belt 55 is wider than the control tire's third belt. Furthermore, the fourth radially outer belt is also wider than the control tire's fourth belt. Preferably, the width of the fourth belt ranges from 744 mm to 780 mm, and more preferably from 760 mm to 770 mm. Preferably, the fourth belt width is 55 to 65% of the tread arc width. The wider belts result in lower rolling resistance, reduced shoulder length, less deflection, less heat and a more evenly distributed footprint, based upon FEA analysis. The wider belt widths also result in an increased lateral spring rate.

Also, the bead apex of the tire preferably has a reduced radial height. The bead apex height is preferably in the range of from 160 mm to 260 mm, more preferably from 170 to 200 mm, and more preferably in the range of from 175 to 195 mm. The apex is also preferably made of two compounds, and has a more curved axially outer face. The reduced height of the apex results in less deflection in the bead area over the flange under load.

In order to reduce the strain in the lower sidewall of the tire, the gauge of the sidewall is preferably reduced. The tire sidewall gauge is substantially reduced in the 150 mm to the 460 mm height from cavity baseline.

Preferably, the molded base width is in the range of 40 to 50 inches, more preferably in the range of 44-49 inches. The reduction of molded base width results in a reduced section width. Preferably, the molded base width is wider than the rim width. The reduced molded base width results in a more stable tire, and reduced section width that has lower rolling resistance. The reduced molded base width also results in a crown of the tire that has increased load bearing resulting in a more rounded footprint.

Overall, the tire has an improved overall performance due to an improved footprint and improved distribution of the heat load.

## Claims

1. A heavy-duty tire comprising a carcass and a tread (12) located radially outward of the carcass, the tread (12) having a plurality of lugs (30, 40, 50, 60, 70), the lugs (30, 40, 50, 60, 70) extending radially outward from an inner tread area and being located between a first and a second lateral tread edge (13, 14), a first row of circumferentially aligned lugs (30), the lugs (30) extending from the first tread lateral edge (13) axially inwards toward the center plane, a second row of circumferentially aligned lugs (40), the lugs (40) extending from the opposite second lateral tread edge (14) and axially inwards toward the center plane, wherein the lugs (30, 40) of the first and the second row are separated by a plurality of shoulder grooves (22, 24), wherein the lugs (30) of the first row of lugs are axially aligned with the lugs (40) of the second row of lugs, wherein a center row of lugs (50) is located between a first and second row of center offset lugs (60, 70), the first row of center offset lugs (60) being offset from the second row of center offset lugs (70), and wherein all of the lugs (30, 40, 50, 60, 70) in each row are aligned circumferentially, **characterized in that** the center lugs (50) are joined to each other by a center groove (60'), the center groove (60') extending at an angle of 0 degrees with respect to the circumferential direction, and wherein the axially outer ends of the center lugs (50) are defined by grooves (52, 54, 56, 58) which are arranged to form a diamond like shape of the center lugs (50).

2. The heavy-duty tire of claim 1 wherein at least one of the center grooves (60') has a tie bar (62).

3. The heavy-duty tire of at least one of the previous claims wherein the tire (10) has a shoulder drop in a range of from 64 mm to 120 mm, preferably 80 mm to 100 mm such as 90 mm.

4. The heavy-duty tire of at least one of the previous claims wherein the tire (10) comprises four belts and wherein the width of the fourth belt ranges from 744 mm to 780 mm, preferably from 760 mm to 770 mm such as 769 mm.

5. The heavy-duty tire of at least one of the previous claims 1 to 3 wherein the tire (10) comprises four belts and wherein the width of the fourth belt is in a range of from 55 % to 65% of the tread arc width, the tread arc width being preferably in a range of from 1200 mm to 1340 mm or from 1250 mm to 1290 mm such as 1270 mm.

6. The heavy-duty tire of at least one of the previous claims wherein the tread (12) is a multi radius tread having at least three different radii, wherein a first radius (R1) ranges from 2200 to 2500 mm, a second radius (R2) is less than the first radius (R1) and is preferably in a range of from 1600 to 2100 mm, and wherein a third radius (R3) is preferably in a range of from 1000 to 1500 mm.

## Patentansprüche

1. Reifen für hohe Beanspruchung, umfassend eine Karkasse und eine Lauffläche (12), die sich radial außerhalb der Karkasse befindet, wobei die Lauffläche (12) mehrere Stollen (30, 40, 50, 60, 70) aufweist, wobei sich die Stollen (30, 40, 50, 60, 70) von einem inneren Laufflächenbereich radial nach außen erstrecken und sich zwischen einer ersten und einer zweiten seitlichen Laufflächenkante (13, 14) befindet, eine erste Reihe von in Umfangsrichtung ausgerichteten Stollen (30), wobei sich die Stollen (30) von der ersten seitlichen Laufflächenkante (13) axial in Richtung der Mittelebene nach innen erstrecken, eine zweite Reihe von in Umfangsrichtung ausgerichteten Stollen (40), wobei sich die Stollen (40) von der gegenüberliegenden zweiten seitlichen Laufflächenkante (14) und axial nach innen in Richtung der Mittelebene erstrecken, wobei die Stollen (30, 40) der ersten und der zweiten Reihe durch mehrere Schulterrillen (22, 24) getrennt sind, wobei die Stollen (30) der ersten Stollenreihe axial an den Stollen (40) der zweiten Stollenreihe ausgerichtet sind, wobei sich eine mittlere Stollenreihe (50) zwischen einer ersten und einer zweiten Reihe von mittig versetzten Stollen (60, 70) befinden, wobei die erste Reihe von mittig versetzten Stollen (60) gegenüber der zweiten Reihe von mittig versetzten Stollen (70) versetzt ist, und wobei alle Stollen (30, 40, 50, 60, 70) in jeder Reihe in Umfangsrichtung ausgerichtet sind, **dadurch gekennzeichnet, dass** die Mittelstollen (50) durch eine Mittelrille (60') miteinander verbunden sind, wobei sich die Mittelrille (60') in einem Winkel von 0 Grad in Bezug auf die Umfangsrichtung erstreckt, und wobei die axial äußeren Enden der Mittelstollen (50) durch Rillen (52, 54, 56, 58) definiert sind, die angeordnet sind, um eine diamantartige Form der Mittelstollen (50) auszubilden.

2. Reifen für hohe Beanspruchung nach Anspruch 1, wobei wenigstens eine der Mittelrillen (60') einen Profilsteg (62) aufweist.

3. Reifen für hohe Beanspruchung nach wenigstens einem der vorhergehenden Ansprüche, wobei der Reifen (10) einen Schulterabfall in einem Bereich von 64 mm bis 120 mm, vorzugsweise 80 mm bis 100 mm, wie etwa 90 mm, aufweist.

4. Reifen für hohe Beanspruchung nach wenigstens einem der vorhergehenden Ansprüche, wobei der Reifen (10) vier Gürtel umfasst und wobei die Breite des vierten Gürtels von 744 mm bis 780 mm, vorzugsweise von 760 mm bis 770 mm, wie etwa 769 mm, reicht.

5. Reifen für hohe Beanspruchung nach wenigstens einem der vorhergehenden Ansprüche 1 bis 3, wobei der Reifen (10) vier Gürtel umfasst und wobei die Breite des vierten Gürtels in einem Bereich von 55 % bis 65 % der Laufflächenbogenbreite liegt, wobei die Laufflächenbogenbreite vorzugsweise in einem Bereich von 1200 mm bis 1340 mm oder von 1250 mm bis 1290 mm, wie etwa 1270 mm, liegt.

6. Reifen für hohe Beanspruchung nach wenigstens einem der vorhergehenden Ansprüche, wobei die Lauffläche (12) eine Multi-Radien-Lauffläche mit wenigstens drei verschiedenen Radien ist, wobei ein erster Radius (R1) von 2200 bis 2500 mm reicht, ein zweiter Radius (R2) kleiner als der erste Radius (R1) ist, und vorzugsweise in einem Bereich von 1600 bis zu 2100 mm liegt, und wobei ein dritter Radius (R3) vorzugsweise in einem Bereich von 1000 bis zu 1500 mm liegt.

## Revendications

1. Bandage pneumatique super-résistant comprenant une carcasse et une bande de roulement (12) disposée en position radiale à l'extérieur de la carcasse, la bande de roulement (12) possédant plusieurs barrettes (30, 40, 50, 60, 70), les barrettes (30, 40, 50, 60, 70) s'étendant en direction radiale vers l'extérieur à partir d'une zone interne de bande de roulement et étant disposées entre un premier et un second bord latéral de bande de roulement (13, 14), une première rangée de barrettes disposées en alignement en direction circonférentielle (30), les barrettes (30) s'étendant à partir du premier bord latéral de bande de roulement (13) en direction axiale vers l'intérieur dans la direction du plan central, une seconde rangée de barrettes disposées en alignement en direction circonférentielle (40), les barrettes (40) s'étendant à partir du second bord latéral opposé de bande de roulement (14) et en direction axiale vers l'intérieur dans la direction du plan central; dans lequel les barrettes (30, 40) de la première et de la seconde rangée sont séparées par un certain nombre de rainures d'épaulement (22, 24) ; dans lequel les barrettes (30) de la première rangée de barrettes sont disposés en alignement en direction axiale avec les barrettes (40) de la seconde rangée de barrettes ; dans lequel une rangée centrale de barrettes (50) est disposée entre une première et une seconde rangée de barrettes décalées par rapport au centre (60, 70), la première rangée de barrettes (60) décalées par rapport au centre étant décalées par rapport à la seconde rangée de barrettes (70) décalées par rapport au centre ; et dans lequel la totalité des barrettes (30, 40, 50, 60, 70) dans chaque rangée sont disposées en alignement en direction circonférentielle, **caractérisé en ce que** les barrettes centrales (50) sont jointes les unes aux autres par l'intermédiaire d'une rainure centrale (60'), la rainure centrale (60') s'étendant en formant un angle de 0° par rapport à la direction circonférentielle ; et dans lequel les extrémités externes en direction axiale des barrettes centrales (50) sont définies par des rainures (52, 54, 56, 58) qui sont disposées pour conférer une configuration en forme de losange aux barrettes centrales (50).

2. Bandage pneumatique super-résistant selon la revendication 1, dans lequel au moins une des rainures centrales (60') possède un pont de gomme (62).

3. Bandage pneumatique super-résistant selon au moins une des revendications précédentes, dans lequel le bandage pneumatique (10) possède une profondeur d'épaulement dans la plage de 64 mm à 120 mm, de préférence de 80 mm à 100 mm, par exemple s'élève à 90 mm.

4. Bandage pneumatique super-résistant selon au moins une des revendications précédentes, dans lequel le bandage pneumatique (10) comprend quatre ceintures; et dans lequel la largeur de la quatrième ceinture se situe dans la plage de 744 mm à 780 mm, de préférence de 760 mm à 770 mm, par exemple s'élève à 769 mm.

5. Bandage pneumatique super-résistant selon au moins une des revendications précédentes 1 à 3, dans lequel le bandage pneumatique (10) comprend quatre ceintures et dans lequel la largeur de la quatrième ceinture se situe dans une plage de 55 % à 65 % de la largeur d'arc de bande de roulement, la largeur d'arc de bande de roulement se situant de préférence dans une plage de 1.200 mm à 1.340 mm ou de 1.250 mm à 1.290 mm, par exemple s'élève à 1.270 mm.

6. Bandage pneumatique super-résistant selon au moins une des revendications précédentes, dans lequel la bande de roulement (12) représente une bande de roulement du type à plusieurs rayons, possédant au moins trois rayons différents ; dans lequel un premier rayon (R1) se situe dans la plage de 2.200 à 2.500 mm, un deuxième rayon (R2) est inférieur au premier rayon (R1) et se situe de préférence dans une plage de 1.600 à 2.100 mm; et dans lequel un troisième rayon (R3) se situe de préférence dans une plage de 1.000 à 1.500 mm.
